# FASCICULE DE BREVET EUROPEEN

(11) **EP 1 677 944 B1**
(45) Date de publication et mention de la délivrance du brevet: **05.12.2007**
(21) Numéro de dépôt: 04805765.7
(22) Date de dépôt: 21.10.2004
(51) Int. Cl.: B23Q 16/10, B24B 41/06, B23Q 1/52, B23Q 7/02

(54) **DISPOSITIF PORTE-PIECE MODULAIRE ET POLYVALENT**
VIELSEITIGE UND MODULARE WERKSTÜCKHALTEVORRICHTUNG
VERSATILE AND MODULAR WORKPIECE HOLDING DEVICE

(30) Priorité: 21.10.2003 FR 0312318
(43) Date de publication de la demande: 12.07.2006
(73) Titulaire: COMAU SYSTEMES FRANCE, 78191 Trappes (FR)
(72) Inventeur: BETEILLE, Pierre, F-81570 Semalens (FR)
(74) Mandataire: Thurgood, Alexander John
(86) Numéro de dépôt international: PCT/FR2004/050522
(87) Numéro de publication internationale: WO 2005/039819

(56) Documents cités:
- EP-A- 1 285 721
- DE-C- 19 913 715
- US-A1- 2002 006 764

## Description

### DOMAINE D'APPLICATION DE L'INVENTION

La présente invention a trait au domaine des machines-outils et notamment aux adaptations permettant de mouvoir la pièce à usiner à l'intérieur du poste d'usinage dans les meilleures conditions.

### DESCRIPTION DE L'ART ANTÉRIEUR

Selon les usinages requis, le dispositif porte-pièce d'un poste d'usinage donne différentes possibilités de mouvements devant l'outil à la pièce entre ou pendant les différents usinages. Ces possibilités de mise en mouvement évitent le démontage et le remontage de la pièce sur son dispositif porte-pièce lorsque la gamme d'usinage de la pièce requiert un ou plusieurs usinages ou types d'usinage sur des faces différentes de la pièce.

En effet, les pièces lors de leur usinage sont associées à un montage d'usinage assurant une mise en position et un maintien en position particulièrement précis. Une opération de démontage et de remontage est non seulement fastidieuse mais risque également de provoquer un défaut de repositionnement.

L'outil lui-même ou son dispositif support est susceptible de se mouvoir selon plusieurs axes en fonction des capacités de la machine-outil.

Il est classique qu'un dispositif porte-pièce propose une possibilité de mise en mouvement en rotation de la pièce à usiner selon un axe classiquement vertical perpendiculaire à l'axe (dit axe Z) de plongée de l'outil. Cette mise en mouvement permet d'assurer un usinage classique sur l'ensemble des faces latérales de la pièce sans retirer la pièce de son montage d'usinage.

Or, la gamme d'usinage peut prévoir un usinage sur la face supérieure de la pièce non accessible classiquement ou des usinages complexes nécessitant la combinaison d'autres mouvements.

Afin de pallier cette limitation, les dispositifs porte pièce peuvent être équipés d'une deuxième possibilité de mise en mouvement en rotation transversal selon un axe classiquement horizontal et perpendiculaire audit axe de plongée ou de travail de l'outil.

La mise en oeuvre de cette possibilité, rencontre divers problèmes, parmi ceux-ci :
- contrairement à la mise en oeuvre du premier axe de mouvement en rotation, le deuxième axe de mouvement supporte sur ses paliers de guidage en rotation les contraintes dues non seulement à l'opération d'usinage mais également à la masse du montage d'usinage éventuellement déjà associé au moyen de mise en mouvement de rotation selon le premier axe et lui-même,
- la mise en oeuvre de cette possibilité de mise en mouvement requiert des moyens de mise en mouvement à fort couple qui ne peuvent produire des accélérations venant en adéquation avec les mouvements et les usinages à grande vitesse que peut réaliser aujourd'hui une machine-outil,
- la mise en oeuvre de ce deuxième axe de mouvement en rotation de la pièce exige une possibilité de mouvement du montage porte-pièce qui ne peut être réalisée que par séparation plus ou moins importante de ce montage du bâti par rapport à la partie fixe du dispositif porte-pièce ce qui implique un manque d'homogénéité dans les déformations exercées sur le dispositif lors d'échauffement,
- la mise en mouvement de la pièce selon ce deuxième axe pendant l'opération d'usinage requiert des moyens de contrôles de mise en mouvement et des moyens de mise en mouvement susceptibles de prendre en compte les contraintes variables dues à une grande masse tournante sur laquelle est réalisé un ou plusieurs usinages.

Un autre inconvénient de ce type de mise en oeuvre est qu'il est difficile de créer un dispositif porte-pièce polyvalent susceptible de s'adapter à plusieurs types de pièces. En effet, l'élément tournant qui accueille le montage d'usinage forme classiquement un bloc compact avec les arbres assurant sa liaison pivot avec le reste du dispositif. Cet élément constituant la pièce sur laquelle le plus grand nombre d'opérations doit être réalisé à des fins d'accueil de la pièce et de son montage d'usinage doit être la plus simple possible.

En outre, selon la machine-outil, la distance entre les paliers de guidage peut varier ce qui implique le changement complet de l'ensemble formé par le plateau et les arbres.

EP- 1 285 721-A montre un dispositif porte-pièce selon le préambule de la revendication 7.

### DESCRIPTION DE L'INVENTION

Partant de cet état de fait, la demanderesse a mené des recherches visant à obvier aux inconvénients précités en proposant un dispositif porte-pièce modulaire et polyvalent équipé d'un axe de mise en mouvement de rotation transversal par rapport à l'axe de plongée d'un outil d'une machine-outil d'usinage auquel le dispositif est associé présentant une structure prenant mieux en compte les contraintes auxquelles le dispositif est soumis, disposant de possibilités d'accélération optimisées et gérant au mieux les problèmes de température.

Selon l'invention, le dispositif porte-pièce équipé d'un axe de mise en mouvement de rotation transversal par rapport à l'axe de plongée d'un outil d'une machine-outil d'usinage à laquelle le dispositif est associé, est remarquable en ce qu'il est constitué par un bâti supportant deux paliers de guidage en rotation selon ledit axe de rotation transversal, la structure formée par le bâti et les deux paliers étant fermée par un plateau tournant porte-pièce dont les extrémités sont liées de manière démontable aux deux paliers de guidage en rotation qui sont aménagés pour prendre en compte des efforts axiaux, les paliers supportant et guidant en rotation, deux arbres tournants qui présentent chacun une surface d'appui et de fixation pour le plateau d'accueil.

Cette caractéristique permet de répondre aux objectifs de l'invention en proposant une configuration modulaire du dispositif porte-pièce.

Ainsi, le plateau tournant ne forme pas un bloc avec les arbres qui assurent sa liaison pivot avec les paliers du dispositifs ainsi les liaisons entre le paliers et les arbres ne sont pas modifiés si l'écartement entre les deux paliers doit changer du fait d'un nombre plus important de pièces à accueillir où d'une machine-outil nécessitant cette écartement comme par exemple une machine-outil mettant en oeuvre une pluralité de broches. Seul le plateau voit sa longueur adaptée à l'application.

En effet, le plateau démontable devient une pièce particulièrement simple dont la réalisation, la manutention et l'adaptation à l'application sont en conséquence facilitées. En effet, selon une caractéristique particulièrement avantageuse, le plateau tournant est constitué par une plaque adoptant une forme parallélépipédique. La face supérieure de cette plaque devient une surface d'accueil polyvalente susceptible d'accueillir ou d'être préformée pour accueillir, toute pièce ou montage de pièce.

Un plateau démontable a pour autre avantage d'autoriser un accès plus aisé des paliers ce qui est particulièrement utile pour leur maintenance.

Cette séparation entre le plateau et les paliers autorise en outre plusieurs solutions de réglage du positionnement du plateau et donc de la pièce par rapport à l'outil.

Cette modularité permet d'envisager plusieurs solutions de guidage et d'entraînement ainsi selon une caractéristique particulièrement avantageuse de l'invention, ledit plateau est mis en mouvement par au moins un moyen moteur de type moteur à entraînement direct intégré à un des paliers.

Cette caractéristique est particulièrement avantageuse en ce qu'elle propose un guidage du plateau tournant selon ledit axe transversal au moyen de deux paliers ce qui contribue à mieux répartir les contraintes auxquelles le dispositif est soumis. En outre, cette caractéristique entraîne un moyen de mise en mouvement particulièrement avantageux, c'est à dire un moteur à entraînement direct qui permet d'assurer un positionnement précis ainsi que des accélérations optimisées. Ce dernier point permet de rendre cohérent ce dispositif de mise en mouvement de la pièce à usiner avec les moyens de mise en mouvement des machines-outils d'usinage à très grande vitesse qui assurent des mouvements et des usinages à très grande vitesse.

Un entraînement direct a en outre pour avantage d'éviter les jeux et les déformations susceptibles de se créer dans une cinématique plus classique. De plus, il diminue le nombre de pièces et donc l'inertie du dispositif ainsi que la masse embarquée. Cet entraînement direct a pour autre fonction d'autoriser des mouvements de travail de la pièce c'est à dire de mettre en mouvement la pièce pendant que l'outil est en contact avec elle. Ainsi, selon une autre caractéristique particulièrement avantageuse de l'invention, le moteur à entraînement direct met en mouvement la pièce à usiner pendant l'opération d'usinage alors que l'outil et la pièce sont en contact. L'axe de rotation du plateau devient donc un axe d'usinage.

La configuration en plusieurs modules constituant le dispositif à savoir le plateau d'accueil des pièces, et les deux paliers, permet de proposer plusieurs solutions d'entraînement. Ainsi par exemple, le deuxième palier peut accueillir un autre moyen moteur de type à entraînement direct sans modification du premier palier ni du plateau support de la pièce.

Étant donné que ce moyen de mise en mouvement est capable d'optimiser les accélérations et la précision d'un dispositif porte-pièce proposant un axe de mouvement en rotation transversal, la demanderesse a mené des recherches afin d'optimiser le bâti accueillant une telle cinématique à deux paliers ainsi qu'une telle motorisation.

La fermeture de la structure formée par le dispositif permet de faire partager aux deux points de guidage les mêmes contraintes notamment lorsque le plateau est soumis à divers efforts mécaniques dus à l'opération d'usinage. La capacité des paliers à prendre en compte les efforts axiaux optimise cette fermeture. En effet, classiquement dans un guidage en rotation par deux paliers, un des paliers ne prend pas en compte les efforts axiaux pour laisser une certaine tolérance dans le positionnement de l'arbre qu'il guide. Les deux paliers du dispositif de l'invention prennent en compte ces efforts optimisant la rigidité de la structure fermée. Toujours pour optimiser cette rigidité, le plateau tournant de l'invention est associé à au moins une poutrelle de rigidification. Cette poutrelle respecte la configuration modulaire du dispositif de l'invention en ce qu'elle n'est pas modifiée pour les différentes applications du dispositif. Pour ce faire elle est avantageusement disposée sur la face opposée à celle du parallélépipède formé par le plateau qui accueille la pièce.

Cette même opération d'usinage est susceptible de provoquer une augmentation de température qui, grâce à la fermeture de la structure peut se répartir de manière isotrope.

Néanmoins, les critères de précision des usinages requièrent que le phénomène de dilatation soit géré au-delà de la bonne répartition des changements de température. Pour répondre à ce besoin, la demanderesse a avantageusement conçu que le bâti soit ménagé intérieurement de façon à créer un circuit de déplacement d'un liquide de refroidissement. Ainsi, l'ensemble des parties du bâti du dispositif de l'invention adopte une même température cohérente.

Afin d'optimiser la gestion des efforts variables que peut créer le plateau tournant du dispositif qui supporte non seulement la pièce à usiner mais également son montage d'usinage avec éventuellement un autre dispositif de mise en mouvement selon un autre axe, la demanderesse a avantageusement imaginé qu'au moins un des paliers est associé à un moyen d'équilibrage qui, lié au plateau tournant, assure un effort compensateur adapté au bras de levier formé par le plateau tournant supportant la pièce. Cette caractéristique permet de consacrer le couple disponible du moteur aux accélérations ou au maintien en position requis par les usinages à grande vitesse en prenant en charge au moins une partie du bras de levier évolutif formé par la masse de l'ensemble mobile tournant autour de l'axe transversal.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique en vue partielle en perspective de dessus illustrant la situation d'un mode de réalisation du dispositif conforme à l'invention par rapport à une machine-outil d'usinage,
la figure 2 est un dessin schématique en vue en perspective du mode de réalisation du dispositif illustré en figure 1,
la figure 3 est un dessin schématique d'une vue de face en coupe du dispositif illustré en figure 1,
la figure 3a est un dessin schématique de détail d'une vue en coupe d'un mode de réalisation du moyen d'équilibrage,

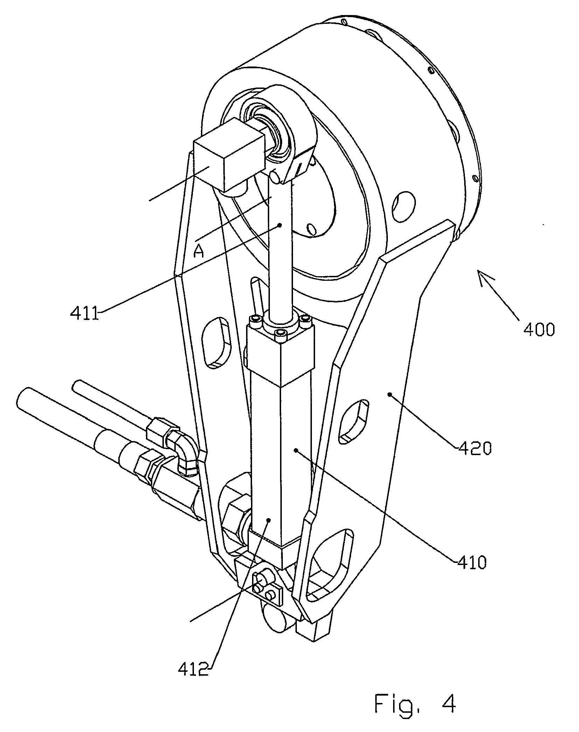

la figure 4 est un dessin schématique d'une vue en perspective d'un mode de réalisation du moyen d'équilibrage conforme à l'invention.

### DESCRIPTION DES MODES DE RÉALISATION PRÉFÉRÉS

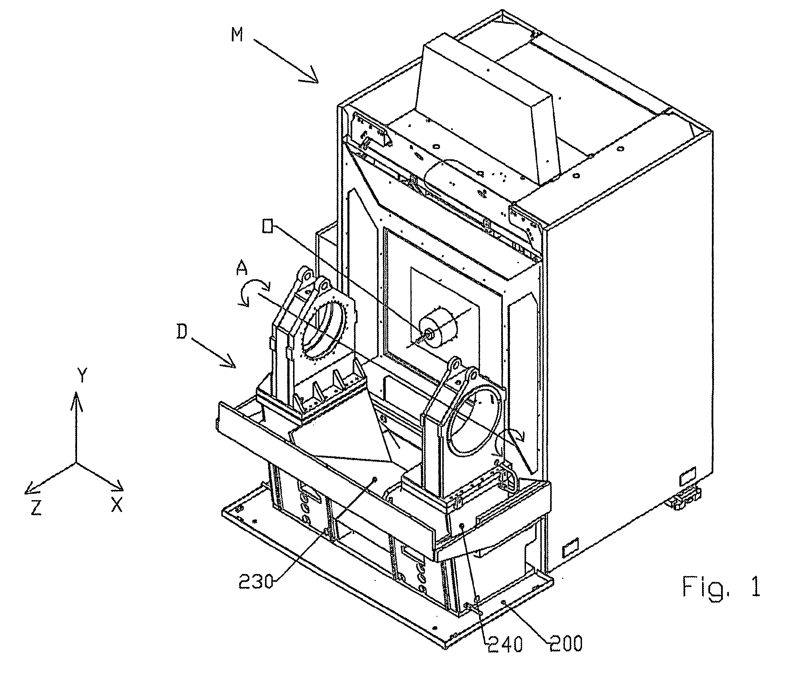

Tel qu'illustré sur le dessin de la figure 1, le dispositif porte-pièce référencé D dans son ensemble est équipé d'un axe référencé A de mise en mouvement de rotation transversal par rapport à l'axe de plongée Z d'un outil O d'une machine-outil d'usinage M à laquelle le dispositif D est associé. Selon le mode de réalisation illustré mais non limitatif, la machine M est une machine-outil à grande vitesse assurant la mise en mouvement sur trois axes X, Y et Z d'un coulant porte-outil O. Selon le mode de réalisation non limitatif illustré, le dispositif D assure ainsi un mouvement de rotation de la pièce à usiner (non illustrée) selon un axe de rotation A transversal horizontal par rapport à l'axe Z de plongée et de rotation de l'outil O. Ainsi, l'axe A est parallèle à l'axe X.

Afin de mieux illustrer la situation du dispositif D par rapport à la machine-outil, le plateau tournant du dispositif a été retiré ne laissant apparaître que le bâti supportant les deux paliers.

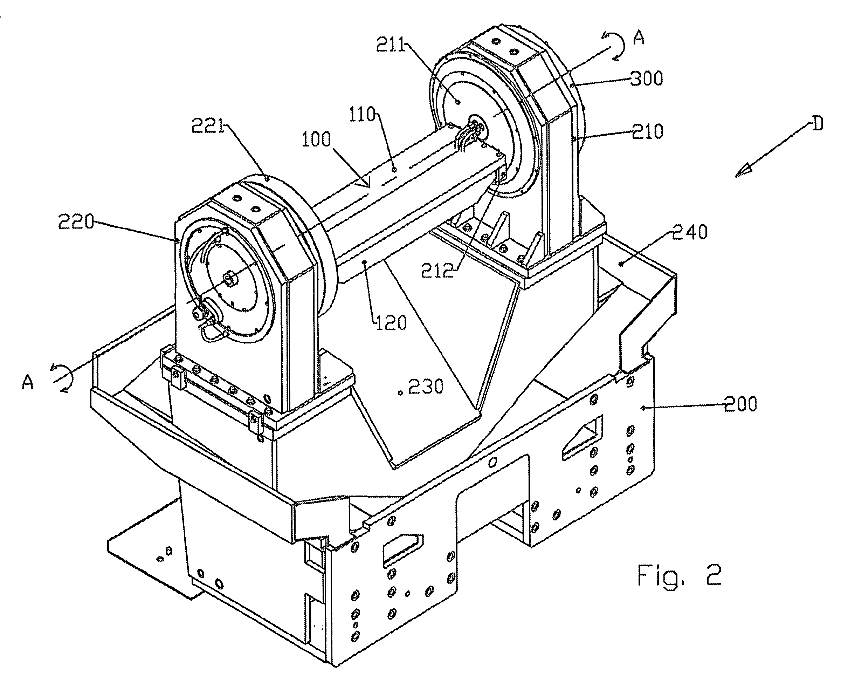

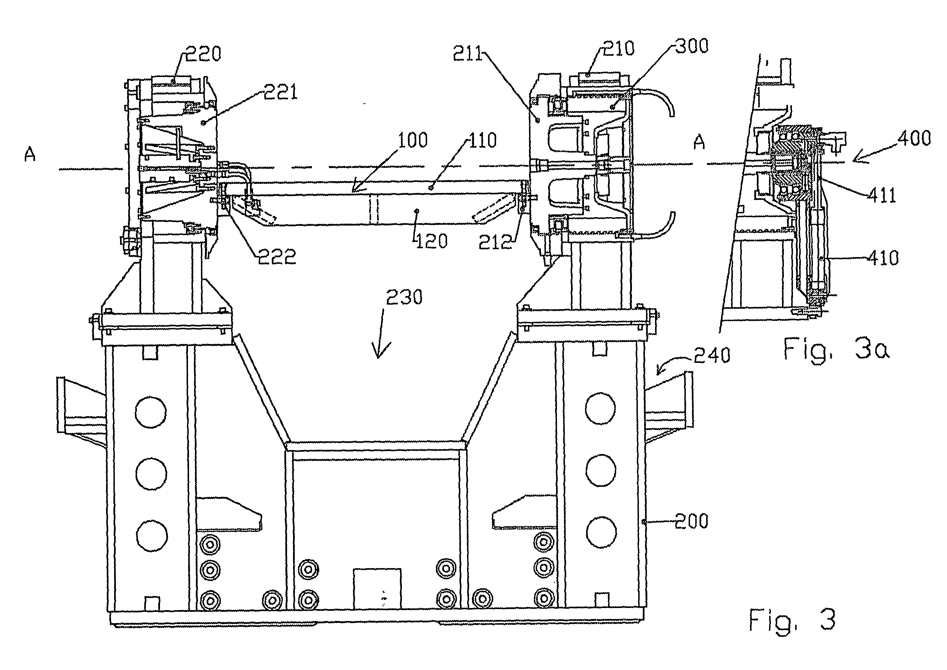

Conformément à l'invention et comme illustré en figures 2 et 3, le dispositif D est constitué par un plateau 100 tournant porte-pièce dont les extrémités sont liées à deux moyens de guidage 210 et 220 en rotation selon ledit axe de rotation transversal A disposés de part et d'autre du plateau 100, ledit plateau 100 étant mis en mouvement par au moins un moyen moteur de type moteur 300 à entraînement direct. Le plan d'appui dudit plateau 100 est décalé par rapport à l'axe de rotation des arbres auxquels ses extrémités sont associées, arbres guidés en rotation par lesdits paliers 210 et 220.

Selon le mode de réalisation illustré, ce plateau 100 est en outre alimenté de façon à fournir toute l'énergie nécessaire aux sous-ensembles qu'il est susceptible d'accueillir comme une pièce à usiner avec son montage d'usinage associés éventuellement à un moyen de mise en mouvement selon un axe vertical.

Comme cela apparaît clairement sur le dessin de la figure 3, la structure formée par le bâti 200, les deux paliers 210 et 220 liés au bâti 200 ainsi que par le plateau tournant 100 par rapport au bâti et guidé dans son mouvement de rotation par les deux paliers, est fermée.

Conformément à l'invention et comme illustré sur les dessins des figures 2 et 3, ledit plateau tournant 100 se décompose en au moins deux parties :
- un plateau d'accueil 110 détachable du dispositif D et sur lequel peut être installée la pièce à usiner associée ou non à son montage d'usinage ou d'autres modules,
- au moins une poutrelle 120 de rigidification du plateau d'accueil 110.
La conception d'un plateau d'accueil est particulièrement avantageuse en ce qu'il permet de créer une surface standard d'accueil pour le dispositif de l'invention. La présence de la ou des poutrelles 120 apporte à ce plateau d'accueil 110 qui, selon le mode de réalisation préféré illustré est constitué par un plateau parallélépipédique, la rigidité qu'il n'a pas de par sa grande surface.

La possibilité prévue d'un démontage du plateau d'accueil 110 facilite l'intégration des montages d'usinage et autre modules susceptibles d'être associés à la pièce lors de son installation dans le dispositif. Ainsi, le plateau 110 est détaché du dispositif D pour accueillir les modules associés avant d'être réinstallé dans le dispositif et de se voir associé la ou les poutrelles 120 de rigidification. Il est ainsi prévu que le plateau d'accueil puisse évoluer pour accueillir toute pièce ou module en gardant la ou les mêmes poutrelles de rigidification.

La liaison entre le plateau 100 et les paliers 220 et 210 a également fait l'objet d'une optimisation. Ainsi conformément à l'invention et comme illustrés dans les dessins des figures 2 et 3, les paliers 210 et 220 supportent et guident en rotation, deux arbres tournants 211 et 221 présentant chacun une surface d'appui et de fixation 212 et 222 pour le plateau d'accueil 110. Ainsi, seules les extrémités du plateau d'accueil 110 sont liées aux paliers 210 et 220.

De plus, selon le mode de réalisation préféré illustré, les surfaces d'appui 212 et 222 destinées à recevoir les extrémités du plateau d'accueil sont volontairement réduites pour ne pas créer une liaison à fortes contraintes entre les deux paliers.

Selon un mode de réalisation préféré, le positionnement du plateau d'accueil 110 sur les appuis 212 et 222 est réalisé par vis et goupille, le maintien en position étant réalisé par serrage des vis facilitant l'installation et la désinstallation du plateau d'accueil démontable.

Afin de climatiser le dispositif D, ledit bâti 200 est ménagé intérieurement de façon à créer un circuit de déplacement d'un liquide de refroidissement. Selon une caractéristique particulièrement avantageuse de l'invention, la demanderesse a avantageusement imaginé que le liquide de refroidissement est le liquide de coupe utilisé par la machine-outil. Ainsi, la température à laquelle le dispositif D est régulé n'est pas incohérente avec celle de l'opération d'usinage ou avec les variations de températures survenant à l'intérieur du poste d'usinage. L'utilisation du liquide de coupe venant d'être utilisé par le poste d'usinage comme liquide de refroidissement non seulement évite l'utilisation d'un liquide différent mais permet également d'exploiter un liquide déjà climatisé.

Selon un mode de réalisation particulier envisagé, le plateau tournant 100 est lui-même ménagé d'un circuit de refroidissement dans lequel circule ledit liquide de refroidissement.

Selon un autre mode de réalisation, le plateau tournant 100 n'est pas ménagé intérieurement pour faire circuler un liquide de refroidissement car déjà climatisé par la projection du liquide de coupe sur ses surfaces qui supportent la pièce à usiner. En effet, le plateau tournant 100 est l'élément du dispositif D qui est le plus soumis à la projection du liquide de coupe le rendant ainsi automatiquement climatisé.

Comme illustré sur les dessins des figures 1, 2 et 3, le bâti 200 du dispositif D est en outre aménagé pour faciliter l'évacuation des copeaux. Ainsi par exemple, le bâti 200 est aménagé d'une trémie centrale 230 disposée au-dessous du plateau tournant 100 ainsi que d'une goulotte ou gouttière 240 disposée en périphérie du dispositif D.

Conformément à l'invention, ces trémies et goulottes permettent de récupérer le liquide de coupe climatisé et de le faire circuler à l'intérieur du bâti 200 pour rendre cohérente la température du dispositif D avec celle du poste d'usinage. Ainsi non seulement le dispositif D comporte une structure fermée lui permettant de mieux gérer les contraintes mécaniques auxquelles il est soumis mais il comprend également un moyen de climatisation original lui permettant de mieux gérer les différences de températures existantes classiquement dans un tel dispositif.

Le dispositif D de l'invention adopte en complément de celles intégrant un moyen de mise en mouvement de type moteur à axe direct, des caractéristiques susceptibles d'optimiser la précision d'un tel matériel et en conséquence celle des usinages réalisés par une machine-outil qui s'y associe.

Conformément à l'invention et selon le mode de réalisation non limitatif illustré, le dispositif D adopte une configuration dans laquelle le palier 210 comporte un moyen de guidage et un moteur 300 alors que le palier 220 ne comporte qu'un moyen de guidage.

Selon un autre mode de réalisation conforme à l'invention, le dispositif D comporte pour chaque palier 210 et 220, un moteur à entraînement direct dont la commande est synchronisée. Cette caractéristique permet de proposer un dispositif D disposant d'une plus grande puissance pour la mise en mouvement selon l'axe A, puissance qui peut être nécessaire en regard de la masse de l'ensemble à faire tourner selon cet axe ou en regard des efforts induits par l'opération d'usinage. La présence de deux moyens moteurs synchronisés permet également d'éviter tout décalage d'entraînement entre l'extrémité du plateau 100 qui est directement entraînée et celle qui est simplement guidée.

Selon un mode de réalisation particulièrement avantageux mais non limitatif du dispositif de l'invention D, au moins un palier est équipé de moyens de freinage. Ces moyens de freinage permettent le maintien en position de l'angle pris par le plateau tournant 100 entraîné le moteur 300. Ils ont pour avantage de soulager le ou les moteurs lorsque ces derniers doivent conserver la même position. Bien entendu, selon un mode de réalisation, chaque palier 210 et 220 est équipé d'un moyen de freinage. Selon un mode de réalisation non limitatif, ce moyen de freinage se présente sous la forme d'un frein à disque.

Comme illustré en figure, 3a et 4, afin de mieux prendre en compte les efforts variables auxquels est soumise la motorisation d'un tel dispositif D selon la position angulaire du plateau 100 par rapport à l'axe A, la demanderesse a avantageusement imaginé qu'au moins un des paliers 210 ou 220 est associé à un moyen d'équilibrage 400 assurant un effort compensateur adapté au bras de levier formé par le plateau tournant supportant la pièce. Cette caractéristique a pour avantage de mieux exploiter les possibilités de réaliser des mouvements de travail par le ou les entraînements directs.

Selon une autre caractéristique particulièrement avantageuse de l'invention, ledit moyen d'équilibrage 400 est constitué par un vérin hydraulique 410 associé à un accumulateur (non illustré) dont la pression est réglée selon le bras de levier que forme le plateau tournant 100. Comme illustrée, l'extrémité de tige 411 est liée au plateau tournant 100 ou du moins à un élément lié au plateau tournant 100. Le corps 412 est lui articulé par rapport à une partie fixe 420. L'extrémité de la tige 411 suit le mouvement de rotation du plateau 100 assurant ainsi un mouvement d'entrée ou de sortie de tige 411 à l'intérieur du corps 412 qui ainsi se remplit ou se vide selon l'effort à fournir. Ainsi, l'accumulateur peut fournir une pression susceptible de faire produire au vérin un effort suffisant pour qu'en position de bras de levier maximal le plateau soit équilibré.

Selon une autre caractéristique particulièrement avantageuse illustrée en figure 3a, ce moyen d'équilibrage 400 s'installe sur le côté des paliers non lié à l'extrémité du plateau de façon à ne pas être soumis à la projection directe des copeaux.

Selon une autre caractéristique particulièrement avantageuse, ce moyen d'équilibrage 400 est escamotable et ne s'installe que lorsque la charge installée sur le plateau 100 le rend nécessaire. L'indépendance de ce moyen d'équilibrage 400 par rapport au reste du dispositif permet de ne pas influer sur la répartition des efforts venant du plateau 100 dans le reste de la structure fermée.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

Ainsi par exemple, bien que les capacités d'un tel dispositif soit particulièrement adaptées à une exploitation l'associant à une machine-outil d'usinage à très grande vitesse du type celle mettant en oeuvre des moteurs linéaires, il est parfaitement possible qu'un tel dispositif puisse être associé à des machines-outils mettant en oeuvre d'autres moyens de mise en mouvement.

De plus, le nombre de coulants porte-outils de la machine-outil devant laquelle s'installe le dispositif ainsi que le nombre de pièces accueillies sur le plateau tournant peuvent varier.

## Revendications

1. Dispositif (D) porte-pièce équipé d'un axe de mise en mouvement de rotation transversal par rapport à l'axe de plongée d'un outil d'une machine-outil d'usinage (M) à laquelle le dispositif (D) est associé, constitué par un bâti supportant deux paliers de guidage en rotation selon ledit axe de rotation transversal, la structure formée par le bâti et les deux paliers étant fermée par un plateau tournant porte-pièce(s), comprenant un plateau d'accueil (110), dont les extrémités sont liées de manière démontable aux deux paliers de guidage en rotation qui sont aménagés pour prendre en compte des efforts axiaux, **CARACTÉRISÉ PAR LE FAIT QUE** les paliers (210 et 220) supportent et guident en rotation, deux arbres tournants (211 et 221) qui présentent chacun une surface d'appui et de fixation (212 et 222) pour le plateau d'accueil (110).

2. Dispositif (D) selon la revendication 1, **CARACTÉRISÉ PAR LE FAIT QUE** ledit plateau est mis en mouvement par au moins un moyen moteur de type moteur à entraînement direct intégré à un des paliers.

3. Dispositif (D) selon la revendication 1, **CARACTÉRISÉ PAR LE FAIT QUE** ledit plateau tournant (100) est associé à au moins une poutrelle de rigidification (120) du plateau d'accueil (110).

4. Dispositif (D) selon la revendication 1, **CARACTÉRISÉ PAR LE FAIT QUE** ledit bâti (200) est ménagé intérieurement de façon à créer un circuit de déplacement d'un liquide de refroidissement.

5. Dispositif (D) selon la revendication 4, **CARACTÉRISÉ PAR LE FAIT QUE** le liquide de refroidissement est le liquide de coupe utilisé par la machine-outil (M).

6. Dispositif (D) selon la revendication 1, **CARACTÉRISÉ PAR LE FAIT QU'**il comporte pour chaque palier (210 et 220), un moteur à entraînement direct dont la commande est synchronisée.

7. Dispositif (D) selon la revendication 1, **CARACTÉRISÉ PAR LE FAIT QUE** le plan d'appui dudit plateau (100) est décalé par rapport à l'axe de rotation d'arbres auxquels ses extrémités sont associées, arbres guidés en rotation par lesdits paliers (210 et 220).

8. Dispositif (D) selon la revendication 1, **CARACTÉRISÉ PAR LE FAIT QU'**au moins un des paliers (210 ou 220) est associé à un moyen d'équilibrage (400) assurant un effort compensateur adapté au bras de levier formé par le plateau tournant (100) supportant la pièce.

9. Dispositif (D) selon la revendication 8, **CARACTÉRISÉ PAR LE FAIT QUE** ledit moyen d'équilibrage (400) est constitué par un vérin hydraulique (410) associé à un accumulateur dont la pression est réglée selon le bras de levier que forme le plateau tournant (100).

10. Dispositif (D) selon la revendication 1, **CARACTÉRISÉ PAR LE FAIT QU'**au moins un palier (210 ou 220) est équipé de moyens de freinage.

11. Dispositif (D) selon la revendication 1, **CARACTÉRISÉ PAR LE FAIT QUE** le moteur à entraînement direct (300) met en mouvement la pièce à usiner pendant l'opération d'usinage alors que l'outil et la pièce sont en contact.

## Claims

1. A workpiece holding device (D), provided with a transversal rotation axis in relation to the tool downward axis of a machining machine tool (M), with which the device (D) is associated, constituted by a frame supporting two bearings for rotational guiding according to the aforementioned transversal rotation axis, the structure formed by the frame and the two bearings being closed by a rotatable worktable, comprising a receiving plate (110), the ends of which are removably coupled to two rotational guiding bearings, arranged to take into account axial forces, **characterized by** the fact that the bearings (210 and 220) support and rotationally guide two rotatable shafts (211 and 221) which each have a support and fixation surface (212 and 222) for the receiving plate (110).

2. The device (D) according to claim 1, **characterized by** the fact that the aforementioned worktable is actuated by a direct drive motor integrated with one of the bearings.

3. The device (D) according to claim 1, **characterized by** the fact that the aforementioned rotatable table (100) is associated with at least a rigidification beam (120) for the receiving plate (110).

4. The device (D) according to claim 1, **characterized by** the fact that the aforementioned frame (200) is internally laid out in a manner to create a cooling liquid circulation circuit.

5. The device (D) according to claim 4, **characterized by** the fact that the cooling liquid is the cutting fluid used by the machine tool (M).

6. The device (D) according to claim 1, **characterized by** the fact that it includes, for each bearing (210 and 220), a direct drive motor, the control of which is synchronized.

7. The device (D) according to claim 1, **characterized by** the fact that support plane of the aforementioned table (100) is shifted with respect to the axis of rotation of the shafts to which their ends are coupled, the shafts being rotationally guided by the aforementioned bearings (210 and 220).

8. The device (D) according to claim 1, **characterized by** the fact that at least one of the bearings (210 or 220) is coupled to a compensating means (400) providing a compensating force adapted to the lever arm formed by the rotatable table (100) supporting the piece.

9. The device (D) according to claim 8, **characterized by** the fact that the aforementioned compensating means (400) is constituted by a hydraulic piston (410) coupled to an accumulator, the pressure of which is regulated according to the lever arm formed by the rotatable table (100).

10. The device (D) according to claim 1, **characterized by** the fact that at least one bearing (210 or 220) is equipped with a breaking means.

11. The device (D) according to claim 1, **characterized by** the fact that the direct drive motor (300) actuates the piece to be machined during the machining operation while the machine and the piece are in contact.

## Patentansprüche

1. Werkstückträgervorrichtung (D), die mit einer Drehachse ausgestattet ist, die in Bezug auf die Planachse eines Werkzeugs einer Bearbeitungswerkzeugmaschine (M) quer liegt, mit welcher die Vorrichtung verbunden ist, und die aus einem Gestell besteht, das zwei Lager für die Drehführung entsprechend der besagten, quer liegenden Drehachse trägt, wobei die Struktur, die vom Gestell und den zwei Lagern gebildet wird, von einem drehenden Werkstücktisch geschlossen wird, der einen Aufnahmetisch (110) umfasst, dessen Enden abnehmbar mit den zwei Lagern für die Drehführung verbunden sind, die ausgerichtet sind, um Axialbeanspruchungen zu berücksichtigen, **dadurch gekennzeichnet, dass** die Lager (210 und 220) zwei Drehwellen (211 und 221), die jeweils eine Auflage- und Befestigungsfläche (212 und 222) für den Aufnahmetisch (110) aufweisen, tragen und in Drehbewegung führen.

2. Vorrichtung (D) nach Anspruch 1, **dadurch gekennzeichnet, dass** der besagte Tisch von zumindest einem Motormittel des Typs Motor mit Direktantrieb, das in eines der Lager integriert ist, in Bewegung gesetzt wird.

3. Vorrichtung (D) nach Anspruch 1, **dadurch gekennzeichnet, dass** der besagte Drehtisch (100) mit zumindest einem Versteifungsträger (120) des Aufnahmetisches (110) verbunden ist.

4. Vorrichtung (D) nach Anspruch 1, **dadurch gekennzeichnet, dass** das besagte Gestell (200) innen so eingerichtet ist, dass ein Kreislauf zur Bewegung einer Kühlflüssigkeit geschaffen wird.

5. Vorrichtung (D) nach Anspruch 4, **dadurch gekennzeichnet, dass** die Kühlflüssigkeit das Schneidöl ist, das von der Werkzeugmaschine (M) verwendet wird.

6. Vorrichtung (D) nach Anspruch 1, **dadurch gekennzeichnet, dass** sie für jedes Lager (210 und 220) einen Motor mit Direktantrieb umfasst, dessen Steuerung synchronisiert ist.

7. Vorrichtung (D) nach Anspruch 1, **dadurch gekennzeichnet, dass** die Auflagefläche des besagten Tisches (100) in Bezug auf die Drehachse der Wellen versetzt ist, mit denen seine Enden verbunden sind, wobei die Wellen von den besagten Lagern (210 und 220) in Drehbewegung geführt werden.

8. Vorrichtung (D) nach Anspruch 1, **dadurch gekennzeichnet, dass** zumindest eines der Lager (210 oder 220) mit einem Ausgleichsmittel (400) verbunden ist, das eine Ausgleichsbeanspruchung sicherstellt, die an den Hebelarm angepasst ist, der vom Drehtisch (100), der das Werkstück trägt, gebildet wird.

9. Vorrichtung (D) nach Anspruch 8, **dadurch gekennzeichnet, dass** das besagte Ausgleichsmittel (400) von einem Hydraulikzylinder (410) gebildet wird, der mit einem Akkumulator verbunden ist, dessen Druck entsprechend dem Hebelarm, den der Drehtisch (100) bildet, eingestellt wird.

10. Vorrichtung (D) nach Anspruch 1, **dadurch gekennzeichnet, dass** zumindest ein Lager (210 oder 220) mit Bremsmitteln ausgestattet ist.

11. Vorrichtung (D) nach Anspruch 1, **dadurch gekennzeichnet, dass** der Motor mit Direktantrieb (300) das zu bearbeitende Werkstück beim Bearbeitungsvorgang in Bewegung setzt, während das Werkzeug und das Werkstück in Kontakt stehen.
